# EUROPEAN PATENT APPLICATION

(11) **EP 1 283 510 A1**
(43) Date of publication of application: **12.02.2003**
(21) Application number: 00917378.2
(22) Date of filing: 20.04.2000
(51) Int. Cl.: G09C 1/00, G06F 12/14, G06F 17/60, G06F 19/00

(54) **ELECTRONIC INFORMATION INQUIRING METHOD**

(71) Applicant: Yasukura, Yutaka, Tokyo-to 151-0072 (JP)
(72) Inventor: Yasukura, Yutaka, Tokyo-to 151-0072 (JP)
(74) Representative: Patentanwälte Leinweber & Zimmermann
(86) International application number: JP0002579
(87) International publication number: WO01082267

(57) **Abstract**

An inquired destination A determines an argument α every time an inquiry received, cuts out part of stored electronic information C_{A}, measures its attribute, and forms a information C_{A}, measures its attribute, and forms characteristic information I a, for transmission to an inquiring source B along with the argument α; while the inquiring source cuts out the same part, as cut out by the inquired destination, of electronic information C_{B} stored by itself by applying the augment α, forms characteristic information I b in the same way as done by the inquired destination, and checks it against the characteristic information I a received from the identity between the two elements of electronic information C_{A}, C_{B}. Therefore, the above method can provide a high-reliability checking result by transmitting a very small amount of information without transmitting the contents of the electronic information at all.

## Description

### BACKGROUND OF THE INVENTION

### Technical Field

The present invention relates to an inquiry method for confirming that contents of both concerned parties are the same when the concerned parties store the same electronic information in the case of electronic information exchange or electronic commerce.

### Background Art

Because many computers are connected to a communication network to form a system, the electronic information stored in a computer's external storage such as a hard disk device may be accessed and falsified by a third party through a channel. Moreover, the information may be falsified due to not only the intention of a third party, but also any accident. Furthermore, it is possible for a concerned party to falsify or forge information.

Therefore, it may be sometimes necessary to confirm whether the recorded electronic information keeps a genuine information. For example, in the case of electronic commerce, it is requested according to necessity to confirm whether recorded contents held by transactors coincide with each other. To know whether pieces of electronic information owned by both concerned parties are the same, it is necessary only to exchange and compare pieces of the recorded electronic information. However, when the secrecy of information is requested, it is not preferable to supply the whole electronic information to a channel because the possibility that the information leaks out to a third party increases.

Moreover, to fairly determine the genuineness of electronic information, it is possible to make a neutral third party such as a notary public or an authentication bureau stand between concerned parties. However, if the concerned parties exchange all pieces of information with the notary public or the like, the information may be stolen in the middle of a channel. Moreover, there are disadvantages that the information content handled by the notary public increases, a large channel capacity, high throughput, and long processing time are requested, and particularly, the equipment cost jumps up or the number of customers is subjected to a restrictor in the case of the authentication bureau or a data base center which must communicate with a lot of customers.

Therefore, the present inventor already provided an electronic information inquiry method capable of confirming whether the mutual information contents coincide with each other by exchanging only some pieces of information through PCT/JP00/00121. In the case of the inquiry method disclosed by the present inventor, an electronic information file recorded by an inquired destination is split into a plurality of information elements, part of elements are selected out of the split information elements and transmitted to a inquiring source. In this case, splitting/selecting data recording a method for splitting an information file into information elements and a method for forming an information block to be transmitted are generated and transmitted.

The inquiring source receives the information block to be transmitted and the splitting/selecting data, splits the electronic information file recorded by the inquiring source as indicated in the splitting/selecting data, replaces portions corresponding to transmitted information elements, rearranges the portions in accordance with the splitting/selecting data to unite them, and recoveries the information contents, and thereby completing a collation.

The above disclosure method is safe and requires only a small channel capacity because only a small part of electronic information is exposed to the channel. However, even in the case of the above method, a part of recorded electronic information is supplied to a channel. Therefore, when handling much information, the amount of information to be transmitted increases and congestion of channels easily occurs.

### Disclosure of the Invention

The present invention is made to provide an electronic information collation method capable of confirming the identity between pieces of information in both parties only by exchanging very small amount of information by assuming that the both parties have the same information.

An electronic information inquiry method of the present invention is a method for an inquiring source to obtain information from an inquired destination and confirm whether the electronic information owned by the inquiring source is the same as the information owned by the inquired destination, in which the inquired destination cuts out one or more information elements from electronic information in accordance with a cutting procedure to be decided whenever receiving an inquiry, generates characteristic information indicating characteristics of cut information elements, and transmits the characteristic information and cutting procedure information to the inquiring source, and the inquiring source receives the characteristic information and the cutting procedure information, generates characteristic information based on the same algorithm about information elements obtained by cutting the same portion from the electronic information owned by the inquiring source based on the procedure information, contrasts the generated characteristic information with the characteristic information received from the inquired destination, and thereby confirms the identity between the electronic information in the inquiring source and the electronic information in the inquired destination. Though information can be transmitted through communication, it is needless to say that information can be transmitted in accordance with a method of recording the information in a storage media and sending the medium.

Characteristic information indicates an attribute based on the data in each information element such as a hash value or check sum. It is preferable that an algorithm forming characteristic information is an algorithm having a collision resistance, that is, an algorithm for obtaining one peculiar value from one data value. In the case of an electronic information inquiry method of the present invention, however, because a different portion is cut every inquiry, it is unnecessary for an algorithm to have a very severe collision resistance. Particularly, by putting results purposing a plurality of information elements together and using them as characteristic information, safety is further improved.

An electronic information inquiry method of the present invention splits electronic information into electronic information elements in accordance with a method newly decided every inquiry, selects part of or all of the information elements, measures attributes of selected information elements, and forms characteristic information as an aggregate of the measured attributes.

It is allowed that an inquired destination sends only the characteristic information thus obtained and the above cutting procedure information to an inquiring source. Therefore, the amount of information to be communicated necessary for an inquiry is very small and it is unnecessary to expose any stored electronic information data to a channel.

Moreover, when the same electronic information is inquired, different information is formed because different portions are selected every inquiry. Therefore, even if electronic information can be falsified in accordance with the past characteristic information, because it is impossible to hold the consistency with portions selected for a new inquiry, the same characteristic information is not formed in accordance with falsified information and genuine information.

Thus, an electronic information inquiry method of the present invention makes it possible to very safely confirm the identity by assuming that an inquired destination and inquiring source share the same information and exchanging very small amount of information.

Therefore, it is enough to use only a small channel capacity or a low-throughput of arithmetic unit for collation. Particularly in the case of an organization such as authentication bureau having a lot of pieces of information to be inquired and a lot of inquiry frequencies, it is possible to simplify the equipment and increase the throughput.

In the case of the cutting procedure, it is also allowed to split electronic information into a plurality of information elements in accordance with a splitting/selecting algorithm using an argument to be decided whenever an inquired destination receives an inquiry and select one or more information elements out of split information elements. An argument is the data used for a splitting/selecting algorithm for selecting an information element out of electronic information. An inquiring source can also extract the same portion out of electronic information by applying the same argument to the same algorithm.

An inquired destination generates the characteristic information indicating the characteristic every selected information element, transmits the characteristic information and an argument to an inquiring source, and the inquiring source receives the characteristic information and argument, applies the received argument to the same splitting/selecting algorithm, generates the characteristic information based on the same algorithm every information element obtained by splitting and selecting the electronic information owned by the inquiring source, contrasts the characteristic information in the inquiring source with the characteristic information received from the inquired destination, and thereby confirms the identity between the electronic information in the inquiring source and the electronic information in the inquired destination.

When using an algorithm using an argument, it is possible to extract the electronic information common to the both parties by transmitting only the argument. Therefore, there is an advantage that it is enough to transmit very small amount of information from the inquired destination to the inquiring source.

Moreover, an electronic information inquiry method of the present invention can be not only used for concerned parties to confirm the identity between pieces of electronic information but also used to confirm whether the electronic information of its own changes by previously commit electronic information to neutral authentication bureau and using the authentication bureau as an inquired destination.

Furthermore, an electronic information inquiry method of the present invention can be used to perform neutral and fairer determination by making authentication bureau stand between two or more concerned parties when they confirm the identity between pieces of the electronic information owned by the parties. That is, when concerned parties confirm the identity between contents of pieces of electronic information owned by them, they demand an authentication from authentication bureau. Then, the authentication bureau sends the cut information for deciding an information splitting/selecting method to the both parities concerned. Each concerned party cuts out an information element out of the electronic information stored by the concerned party in accordance with cut information, forms the characteristic information on the information element, and sends the characteristic information to authentication bureau. The authentication bureau can determine whether pieces of the electronic information stored by the concerned parties are the same by examining whether pieces of characteristic information obtained from the concerned parties are the same.

Thus, it is possible to obtain an objective determination even when opinions of concerned parties are different from each other by making authentication bureau stand between them. By using a method of the present invention, it is possible to perform an accurate determination by exchanging very small amount of information.

Moreover, a method of the present invention can be applied to an electronic check or a clinical chart. For example, when the method is applied to an electronic check, a client and a bank store the same electronic check information, and the client uses an electronic check in a virtual mall or the like, the shop at which the client uses the check inquires of the bank about whether the information on the received electronic check is genuine. The bank splits the owned electronic check information into information elements and selects part of them to form characteristic information, sends an argument for division and selection and the characteristic information to the shop, the shop splits and selects the electronic check information received from the client in accordance with the same method as that performed by the bank, measures the attribute selected information elements, and collates the elements with the characteristic information received from the bank to confirm the genuineness of the electronic check.

Thus, it is possible to use an electronic check having a high-reliability only by exchanging a few pieces of information. It is also possible to use an electronic check at a real shop by recording it in a card and carrying the card.

### Brief Description of the Drawings

FIG. 1 is a block diagram for explaining the concept of an electronic information inquiry method of the present invention;
FIG. 2 is a flowchart for explaining an embodiment of an inquiry method of the present invention; and
FIG. 3 is a block diagram for explaining the concept for executing an inquiry method of the present invention through authentication bureau.

### Best Mode of Carrying Out the Invention

An electronic information inquiry method of the present invention is a method of confirming the identity between an electric information of an inquired destination and that of an inquiring source without exchanging an electronic information itself when the both parties respectively store the same electronic information file. In the case of the inquiry method of the present invention, the communication quantity not only is greatly decreased, but also there is no risk of information leak because information is not supplied to a channel.

Moreover, the method of the present invention makes it possible to reduce the recording capacity and communication load of authentication bureau by applying the method to the authentication bureau who certify the content in accordance with a request after an original document is committed.

Furthermore, it is possible to safely compare pieces of information in the concerned parties by using the present invention without committing electronic information to authentication bureau.

The present invention is described below in detail in accordance with an embodiment by referring to the accompanying drawings.

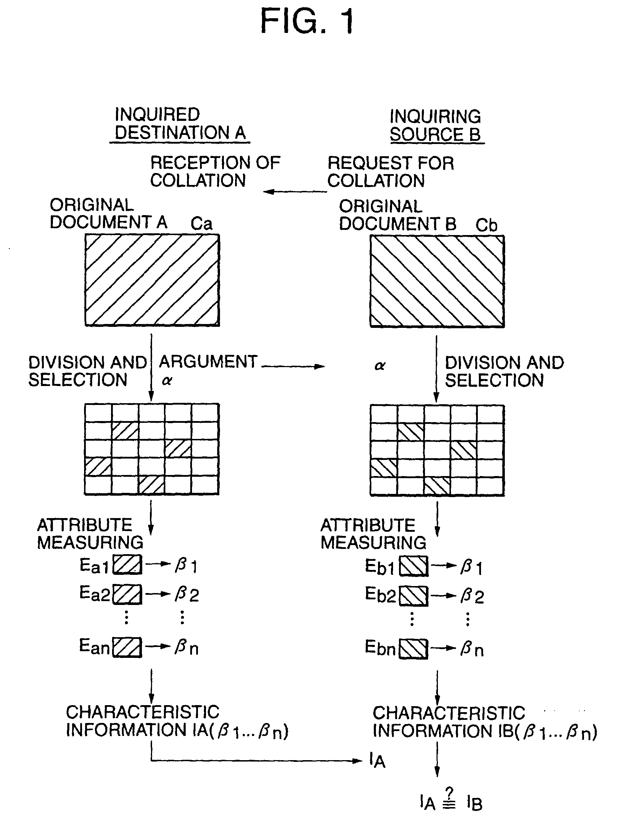

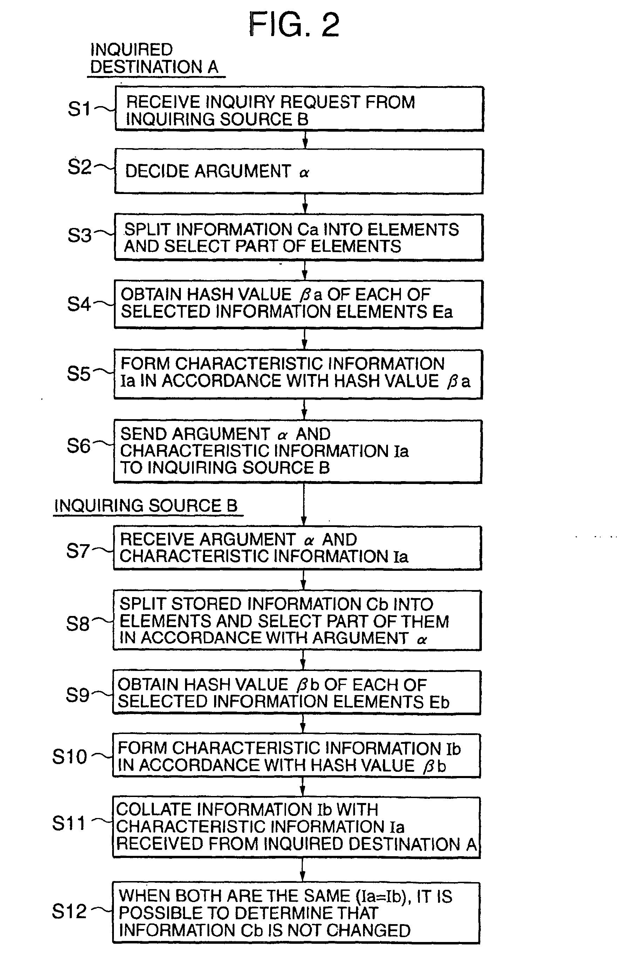

FIG. 1 is a block diagram for explaining the concept of the embodiment of the present invention and FIG. 2 is a flowchart indicating the procedure of the block diagram in FIG. 1. This embodiment further reduces the information content to be communicated by using an argument.

It is assumed that concerned parties A and B respectively record the same electronic information. The above state may occur in authentication bureau that exchanges contracts and order sheets and certifies the content of a document.

First, it is assumed that a concerned party B attempts to confirm whether the electronic information original document C_{B} of its own is the same one as the original document C_{A} owned by an opposite party A. In this case, the concerned party B who is a inquiring source requests the collation of contents of electronic information by assuming the concerned party A as a collation-destination party.

When receiving a request for collation of the original documents from the inquiring source B (S1), the collation-destination party A decides an argument α used for a processing algorithm in order to split and select the original document C_{A} of its own (S2).

The original document C_{A} is split into a plurality of information elements such as a hundreds of information elements in accordance with the splitting/selecting algorithm applied the argument α. Then, part of the information elements are selected in accordance with the algorithm (S3). It is preferable to distribute the information elements to be selected to the whole electronic information. Moreover, it is allowed to purpose all information elements.

Furthermore, function values βa1, βa2,.. β an indicating attributes of selected information elements Ea1, Ea2,...Ean are calculated for the information elements Ea1, Ea2,...,Ean respectively (S4). As long as a function value indicating an attribute is able to form an unique information about the cut electronic information, the format of the function value is not restricted. It is possible to use a hash value or check sum as the above function value.

Then, the characteristic information I a is formed by applying a predetermined processing such as rearrangement and enciphering to these function values (S5) to send it to the inquiring source B together with the argument α (S6). Moreover, it is allowed to transmit the argument α separately from the characteristic information I a.

On the other hand, the inquiring source B receives the argument α and the characteristic information I a sent from the collation-destination party A (S7), applies the argument α used for the collation-destination party A to the same splitting/selecting algorithm previously held by the concerned parties, splits the original document C_{B} stored by the party B at the same position when the collation-destination party A splits the original document Ca, and selects the information elements Eb1, Eb2,...,Ebn at the same position (S8).

Moreover, function values indicating attributes of the selected information elements Eb1, Eb2,...Ebn such as hash values βb1, βb2,... βbn are calculated (S9).

Characteristic information I b is formed by applying a predetermined processing to these function values βb1, βb2,... βbn is formed (S10) to collate the information I b with the characteristic information I a received from the collation-destination party A (S11). Unless the both coincides with each other, there is a difference between the electronic information Ca and the electronic information Cb. When the information I b coincides with the information I a on the collation-destination party A, the electronic information Cb on the inquiring source B coincides with the electronic information Ca on the collation-destination A at a very high probability.

When performing the collation about the function values βb1, βb2,... β bn, it is also allowed to recovery original attribute function values βa1, βa2,... β an from the characteristic information I b and collate them. However, even if arrangement sequences of function values do not coincide with each other, it is possible to obtain a checking result only by confirming that the same value is present in the both sequences.

In the case of the inquiry method of the above embodiment, it is possible for the argument α and the characteristic information I a sent from the collation -destination party A to greatly reduce the quantity of data to be transmitted because the amount of information is very small compared to the electronic information in the original document C_{A}.

Moreover, because an electronic information itself is not made present on a distribution channel in the case of this method, no information leaks out during communication. Even if recording the information in a storage media and transmitting the information, it is possible to secure the safety of electronic information because the information itself is not transported.

Furthermore, the electronic information inquiry method of this embodiment can be used by notary public and authentication bureau. As shown in FIG. 1 and FIG. 2, when receiving a request for collation from the concerned party B serving as an inquiring source, authentication bureau decides an argument α, splits the stored contract electronic information Ca into information elements in accordance with a splitting/selecting algorithm, forms the characteristic information I a about properly-selected information elements, and sends the information I a to the inquiring source B together with the argument α. The inquiring source B splits the electronic information Cb of its own in accordance with the same algorithm, selects the same information elements, forms the characteristic information I b in accordance with the same method, compares the information I b with the characteristic information I a received from an authentication bureau A, and confirms the identity electronic information Ca and electronic information Cb.

Thus, by using a method of the present invention, it is possible to confirm the identity of the electronic information stored by an inquiring source only by transmitting a very small amount of information including only arguments and characteristic information. Therefore, the number of requests for communication load and the capacity of an information processor are decreased and it is possible to process inquiry request of more clients.

Moreover, by using an electronic information inquiry method of the present invention, it is possible to perform a neutral and fairer determination by making authentication bureau stand between concerned parties instead of a case in which the concerned parties confirm each other.

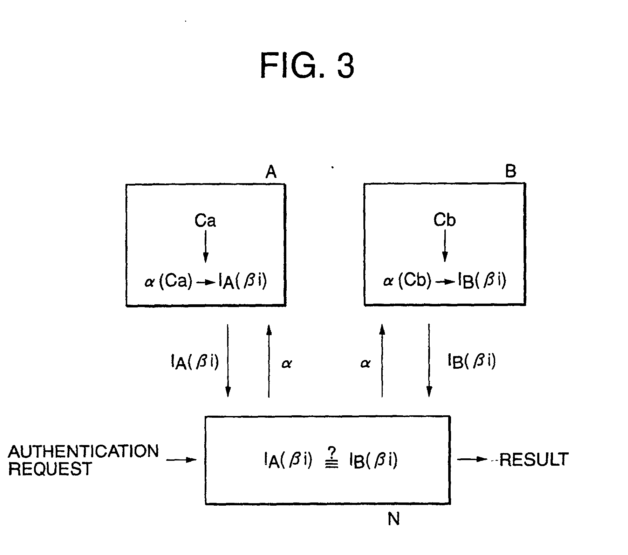

FIG. 3 is a block diagram indicating a case of determining the identity between pieces of electronic information stored by a concerned party A and a concerned party B through an authentication bureau N.

When receiving a request for authentication, the authentication bureau N sends a processing program for splitting and selecting electronic information or an argument α for splitting and selecting the information to the concerned party A and concerned party B. The concerned parties A and B cut out information elements by applying a processing algorithm to the electronic information Ca and electronic information Cb stored by the concerned parties A and B respectively, generate a function β i indicating the attribute of the information elements, and send the function β i to authentication bureau.

The authentication bureau compares the characteristic information IA( β i) received from the concerned party A with the characteristic information IB( β i) received from the concerned party B, determines whether pieces of the electronic information stored by the concerned parties are the same, and communicates a determination result.

According to the above method, because it is unnecessary to commit electronic information itself to authentication bureau, it is possible to safely obtain an objective determination without the fact that the content of the information is known by a third party. Moreover, the above mentioned is very useful for the management by authentication bureau because the amount of information to be stored by the authentication bureau is very small and the communication traffic with a concerned party is vary low.

By using the electronic information inquiry method of this embodiment for a mobile computer used by copying the electronic information in a host computer to the mobile computer and carrying the copied information, it is possible to easily confirm that the electronic information stored in the mobile computer is the same as the original information even at a remote place.

Moreover, the method of this embodiment can be applied to an electronic check.

A bank stores the electronic information same as an electronic check issued for a client. The client uses the electronic check in a virtual mall or the like. A shop where the client uses the check inquires of the bank about whether the received check is genuine. The bank decides a cutting procedure, cuts outs a part of the owned electronic check information to form the characteristic information on the part of the owned electronic check information, and sends the cutting procedure information such as the argument of a splitting/selecting algorithm and the characteristic information to the shop. The shop cuts out the same portion of the electronic check information received from the client in accordance with the same method used by the bank, measures the attribute of the portion of the information to generate characteristic information, and collates the information with the characteristic information received from the bank to confirm the genuineness of the electronic check.

Thus, it is possible to use an electronic check having a high-reliability by transmitting only a few information. It is possible to carry the electronic check by recording it in a card or the like, and use it at real shops.

### Industrial Applicability

As described above in detail, an electronic information inquiry method of the present invention makes it possible to determine whether an electronic information file of an inquiring source is the same as that of an inquired destination without transmitting confirmed electronic information itself. Therefore, the collation between concerned parties and the collation through authentication bureau can be easily executed at a high safety against information leak during communication and a small communication load.

## Claims

1. An electronic information inquiry method comprising:
a step of contacting an inquired destination storing first electronic information with an inquiring source storing second electronic information through an information transmission means;
steps conducted by said inquired destination of deciding an information cutting procedure, cutting out a part of information elements from said first electronic information in accordance with said decided procedure, generating first characteristic information indicating characteristics of said part of information elements, and transmitting said first characteristic information and said cutting procedure information to said inquiring source; and
steps conducted by said inquiring source of receiving said first characteristic information and said cutting procedure information, cutting out an information element from said second electronic information in accordance with said cutting procedure information, generating second characteristic information indicating characteristic of said cut information element in accordance with the same method as that of said inquired destination, and contrasting said second characteristic information with said first characteristic information,
thereby confirming the identity between said second electronic information and said first electronic information.

2. The electronic information inquiry method according to claim 1, **characterized in that**
said cutting procedure is based on a splitting/selecting algorithm capable of similarly splitting electronic information into information elements and selecting the same information elements by applying the same argument,
said inquired destination shares said splitting/selecting algorithm with said inquiring source,
said inquired destination decides said argument to select said information elements in accordance with said argument, and sends said argument to said inquiring source as said cutting procedure information, and,
said inquiring source applies said argument to said splitting/selecting algorithm to generate said second characteristic information in accordance with said first electronic information.

3. The electronic information inquiry method according to claim 1 or 2, **characterized in that**
said characteristic information is a hash value of an information element.

4. An electronic information inquiry method comprising:
a step of contacting among a first concerned party storing first electronic information, a second concerned party storing second electronic information, and an authentication bureau through an information transmission means;
a step for said authentication bureau of transmitting the information of a cutting procedure information to said first concerned party and second concerned party;
steps for said first and second concerned parties of respectively cutting out a predetermined information element from said first and second electronic information in accordance with said cutting procedure information, generating first and second characteristic information indicating characteristics of said information elements, and transmitting the generated characteristic information to said authentication bureau; and
a step for said authentication bureau of contrasting the received first characteristic information with the cutting procedure information,
thereby confirming the identity between said first electronic information and second electronic information.
